# EUROPEAN PATENT SPECIFICATION

(11) **EP 0 552 134 B1**
(45) Date of publication and mention of the grant of the patent: **10.07.1996**
(21) Application number: 93830001.9
(22) Date of filing: 07.01.1993
(51) Int. Cl.: C02F 3/30, C02F 3/22

(54) **A sewage biological purification system**
System zur biologischen Reinigung von Abwasser
Système pour la purification biologique d'eau usée

(30) Priority: 10.01.1992 IT MI920022
(43) Date of publication of application: 21.07.1993
(73) Proprietor: Righetti, Gianmaria, Milano (IT)
(72) Inventor: Righetti, Gianmaria, Milano (IT)
(74) Representative: Adorno, Silvano

(56) References cited:
- EP-A- 0 108 730
- EP-A- 0 154 334
- WO-A-89/08617
- PATENT ABSTRACTS OF JAPAN vol. 12, no. 148 (C-493)(2995) 7 May 1988

## Description

This invention concerns a domestic and industrial sewage biological purification system, and in particular it discloses improvements to Italian Patent No. 1.132.002 filed on July 25, 1980, and issued on June 25, 1986; and to European Patent No. 108730 filed on November 3, 1983 and issued on July 19, 1989; both of them assigned to the Applicant of this patent application.

The system comprising the subject of this invention substantially comprises a denitrification section, an oxy-nitrification section, a settling section and a sterilizing section, which are parts of systems known in this art, and described in particular in the previous patents listed above. The system according to this invention, as it is described in detail in the following, is however an improvement to the state of the art in that it gathers in a single close-packed structure all the operating steps necessary for sewage biological purification, the frame being simple in construction, easy to ship, and quickly erected in the field.

The system according to this invention makes it possible to obtain the above improvements together with the features and the advantages clearly pointed out in the following description.

Before starting to describe the system according to this invention, the features of the state of the art in the field of domestic and industrial sewage purification are mentioned in the following.

The problem of the presence of nitrogen and phosphorus in sewage has worsened worldwide, and in Italy in particular because of the eutrophization process in some lakes in areas of high population density.

The limits provided in Table A of laws 319/76 and 650/79 enforced in Italy, quantitatively define the problem and they pose more stringent requirements on the purification of waters dumped into lakes or at a short distance (10 kilometers) therefrom.

Actually, when sewage to be purified is a highly concentrated one, the simple biological oxidation thereof transforms organic nitrogen into nitrates which, after treatment, have often a concentration much higher than the allowables for disposal to the environment.

Similarly, although phosphorus (like nitrogen) is partially digested by the active slurries produced during biological treatments, when its concentration upstream from said treatments is very high, the downstream water may however retain residual percentages higher than the allowables required by law.

The biochemical oxidation processes of the nitrogen containing compounds have been studied since the forties and fifties, as it is reported in:
Monod, J., "Recherches sur la croissance des cultures - Research about culture growth",Herman 9 Cie, Paris,1942. Hoffman,T., and H. Lees "The Biochemistry of Nitrifying Organisms. 4, The respiration and Intermediate Metabolism of Nitrosomonas", Biochemistry Journal, 54, 575-583 (1953). Buswell, A.H., Shiota, T., Lawrence, N., and I. Van Meter, "Laboratory Studies on the Kinetics of the Growth of Nitrosomonas with Relation to the Nitrification Phase of the BOD Test", Applied Microbiology, 2, pp 21-25 (1954). Lees, H., and J.R. Simpson, "The Biochemistry of the Nitrifying Organisms. 5, Nitrate Oxidation by Nitrobacter", Biochemistry Journal, 65, pp 297-305 (1957).

The above phenomena are based on the property of some bacteria which attack organic nitrogen and transform it from the reduced ( cationic) state (NH₄⁺) to the oxidized state (⁻NO₂ and ⁻NO₃).

In 1973, the Environmental Protection Agency has summarized a number of studies in a handbook "Process Design Manual for Nitrogen Control", U.S. Environmental Protection Agency, Technology transfer, October 1975, which has originated worldwide applications and further research also in Italy.

For instance, it is dated 1983 an interesting paper by L. Bonomo in "Processi di nitrificazione e denitrificazione biologica - Biological Nitrification and Denitrification Processes" in Ingegneria Ambientale, Vol. 12, N.7/8, July-August 1983, wherein besides a selfexplaining definition of the biochemical process, formulas and design criteria for biological nitrification and denitrification systems are reported.

Mention should also be made about a 1990 paper by G. Andreottola, R. Canziani, R. Cossu "Rimozione biologica dei nutrienti dalle acque di scarico - Biological Removal of Nutrients from Wastewaters" Istituto per l'Ambiente, Milano 1990, wherein the problems of biological removal of nutrients from wastewaters are specifically dealt with.

Although the organic nitrogen biochemical oxidation process involves a number of intermediate reactions, wherein enzimes are also taking an active part, as it is reported in Painter, H.A., "A Review of Literature on Inorganic Nitrogen Metabolism in Microorganism", Water Research, 4, N.6, pp. 393-450 (1970), for the purpose of structure design the study of the reactions may be simplified by assuming that the ammonium ion is the base compound to be processed.

Oxidation takes place in two stages: from NH₄⁺ to ⁻NO₂ (due to a prevailing action of Nitrosomonas bacteria) and then from ⁻NO₂ to ⁻NO₃ (Nitrobacter).

Since the transformation velocity of ammonia to nitrite is very slow relative to that from nitrites to nitrates, the presence of nitrites in oxidized sewage may be disregarded. The overall reaction summarizing the process is:

NH₄⁺ + 1.83 O₂ + 1.98 ⁻HCO₃ =

= 0.021 C₅H₇NO₂ + 1.041 H₂O + 0.98 ⁻NO₃ + 1.88 H₂CO₃

wherein the empirical formulation C₅H₇NO₂ has been assumed for the bacterial cell.

As it is shown, the reaction produces H₂CO₃ and ⁻NO₃ in amounts tending to depress the pH of the aqueous solution. Since the oxidation reaction is inhibited by low pH values it is necessary, in particular in pure oxygen based processes, to keep in mind the requirement to dispose of CO₂ as soon as it is generated during system operation.

Studies are available, on more recent dates, concerning processes for nitrogen removal by means of a biochemical reaction of oxidized sewage with reducing substances, as it is reported in:
Mc Carthy, P.L., Beck, L., and P. St.Amant "Biological Denitrification of Wastewaters by Addition of Organic Materials" in "Proc. of the 24th Industrial Waste Conference" May 6, 7 and 8, 1969, Lafayette, Indiana: Purdue University, 1969.

Delviche, C.C., "The Nitrogen Cycle" Scientific American 223, N. 3, pp 137-146 (1970).

Christensen, M.H., and P. Harremoes "Biological Denitrification in Wastewater Treatment", Report 2-72, Department of Sanitary Engineering, Technical University of Denmark, 1972.

In this case as well the reaction takes place in two steps: ⁻NO₃ to ⁻NO₂ reduction followed by ⁻NO₂ to N₂ reduction through the action of bacterial colonies of various species (Pseudomonas, Micrococcus, Archromobacter, and so on), according to the following summarizing reaction, as reported in "Process Design Manual for Nitrogen Control", U.S. Environmental Protection Agency, Technology Transfer, October 1975, referring to the use of methanol as a reducing agent.

⁻NO₃ + 0.833 CH₃OH = 0.5N₂ + 0.833 CO₂ + 1.167H₂O + OH⁻

In this case as well a gas (nitrogen) is generated which must be vented to the environment.

An intensive study concerning the phosphorus related problems and the removal thereof from wastewater has been undertaken in the fifties and sixsties, as it is reported in:
Mackenthun, K.M., "The Phosphorus Problems", JAWWA, 60:90 p 10947 (1968).

Nesbitt, J.B., "Phosphorus Removal -The State of the Art", JWPCF, 41:5, p 701 (1969).

In 1975 E.P.A. issued a handbook "Process Design Manual for Phosphorus Removal" U.S. Environmental Protection Agency, Technology Transfer, April 1976, EPA 625/1-76-001a which was used as a background for further studies concerning both the chemical and biochemical phosphorus removal processes. It is dated 1990 te paper by L. Bonomo for Istituto per l'Ambiente, mentioned above.

Phosphorus removal from sewage by a chemical process has been studied in:
"Process Design Manual for Phosphorus Removal", U.S. Environmental Protection Agency, Technology Transfer, April 1976, EPA 625/1-76-001a, and
Culp, R., Wesner, G.M., Culp, G. "Handbook of Advanced Wastewater Treatment", II Edition, Van Nostrand Reinhold Company, 1978.

By using compounds like Aluminium sulfate and lime according to the following typical chemical reactions:

Al₂(SO₄)₃ + 14H₂O + 2⁻⁻⁻ PO₄ =

= 2AlPO₄ + 3⁻⁻SO₄ + 14H₂O;

3Ca(OH)₂ + 2⁻⁻⁻PO₄ = Ca₃(PO₄)₂ + 6OH⁻

The precipitates of AlPO₄ and Ca₃(PO₄)₂ are separated by settling.

Phosphorus biological removal, as reported in the studies by G.Andreottola, and in "Process Design Manual for Phosphorus Removal" of the U.S. Environmental Protection Agency, and in Liberti L., Boari G., Passino R., "Metodo avanzato di rimozione e recupero di fosforo da acque di scarico - An Advanced Method for Phosphorus Removal and Recovery from Wastewaters", Acqua e Aria, October 1982, pp 855-860, is based instead on processes stressing the natural tendency of active slurries to digest it from the waters to be treated. High reductions (up to 70 - 80%) can be obtained by subjecting the recirculated slurries to strictly anaerobic conditions, and bringing them subsequently into contact with the nutritious substrate comprising the sewage, in an alternating process of phosphorus release and re-digestion. The final cut, when required, may be obtained by a chemical process.

Ion exchange processes as described in the above mentioned paper by Liberti, Boari, Passino, and in "Processo RIM-NUT per l'abbattimento di fosforo e azoto - RIM-NUT Process for Phosphorus and Nitrogen Reduction", Italba S.p.A., Milano, are less used for domestic sewage - due to their high operating costs - while being particularly interesting instead on an industrial scale.

It has been shown above that, for nitrogen removal, in general a biological process is used, which comprises bringing sewage from biological oxidation (oxy-nitrification) tanks into contact with reducing organic carbon sources.

Carbon sources may be an "external" type (for instance: methanol) or else "internal" (the organic raw sewage substrate before biological oxidation) or else - when it is necessary to reach high de-nitrification levels - of endogenous type (the organic substance comprising the biomass bacterial cells).

For domestic sewage processing systems, internal type sources are currently used. Two methods are basically used for bringing raw sewage into contact with oxidized sewage:
preliminary denitrification: it involves installing a tank upstream from the oxy-nitrification tank. All the reducing raw sewage coming into the system, enters said tank, together with a recirculated portion of the oxidized biomass coming out from the oxy-nitrification tank;
post-denitrification: it involves installing a tank downstream from the oxy-nitrification. The whole biomass and a portion of the raw sewage entering the system flows into this tank.

The preliminary denitrification process is more widely used: it involves a recirculation which is sometimes very important, therefore it provides also progressively increasing system performance improvements.

As already shown, the main phosphorus removal systems currently used are the following two types:
a - biological type (through a bacterial cell synthesis process);
b - a chemical type (through insolubilizing compound addition).

The biological type removal is a spontaneous process taking place in active slurry systems,and it is increasingly effective as the slurry load increases (in highly loaded systems, removal rates in the range of 35 - 45% may be attained, as opposed to 10% in extended aeration systems).

The chemical removal method comprises substantially a coagulant and flocculant product addition which - in addition to making settling of active slurries easier - makes it possible to reduce phosphorus compounds through rather complicated schemes involving both actual precipitation and adsorption.

In active slurry type systems, the reagents may be added directly into the oxy-nitrification tank (simultaneous precipitation). Slurry recirculation brings about the important result of providing a reduction in the reagent consumption, compared to what is necessary when an addition is made after the oxy-nitrification tank.

However, the chemical system involves a substantial slurry generation increase (25 to 70% on a dry basis, with simultaneous precipitation).

Therefore, it should be provided in doses reduced to a minimum, and only for completion, on top of a natural biological effect.

The following description is made herein for exemplary and non limiting purposes, referring to the attached Figures, wherein:
Figure 1 is a system schematic, according to a first embodiment;
Figure 2 is a system schematic according to a second embodiment; and
Figure 3 is a block diagram of the system, according to both the above embodiments.

Referring now to the attached Figures, a vertical structure 1, which may be a cylindrical or polygonal shape, encloses the various parts of the system wherein all the operational steps necessary for the subject biological purification are performed. Said structure is self-contained, it is simple in construction, it may be easily shipped in a single pre-fabricated piece, therefore it may be quickly erected in the field.

Raw sewage 2, flowing for instance through a coarse screening system 3, a fine screening system 4, a desilting and de-oiling system 5, is sent by means of a pump P1 to a de-nitrification section D1, provided between the pair of sloping separators 6 and 7.

Sewage passes from de-nitrification section D1 through an opening 8 in the oxy-nitrification section comprising columns R1 and R2. Said opening 8 is in an offset position relative to raw sewage entrance 2, in order to prevent short-circuiting.

Nirogen generated by the reaction collects at the top, and it is vented through a standard type purge valve VS, then it is made to flow to a bacteriostatic filter FB1 and eventually it is sucked by a fan V1 which exhausts the purified gas to the environment.

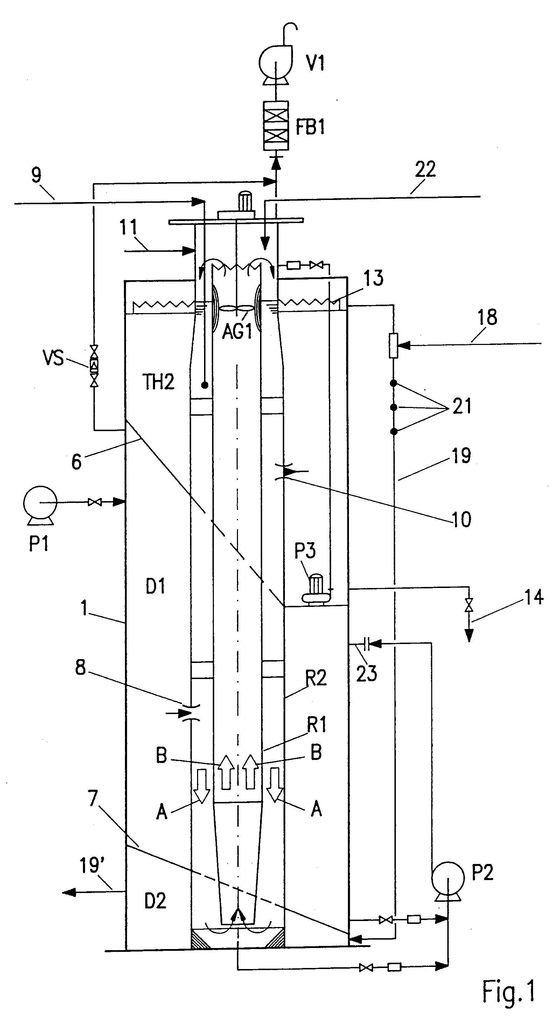

According to a feature of this invention, the above columns R1 and R2 are concentrical relative to each other. Therefore, sewage flows downwards along outer column R2, according to the direction of arrows A. According to the first embodiment of Figure 1, pure oxygen 9 is injected by means of suitable fine bubble dispersing devices in the top portion of outer column R2. The average downward moving velocity of oxygen-mixed sewage is kept at a level of about 0,3 m/sec, in order to prevent the small gas bubbles from climbing upwards in a counter-current direction, thereby making it possible to obtain the dissolution processes which take place during an extended contact time between a gas and a liquid under a high pressure.

Still according to the embodiment of Figure 1, the lower portion of inner center column R1 is tapered; this construction makes it possible to provide, in the lower portion of the outer center column, a dwelling of the larger bubbles which have possibly been left undissolved, and which can thereby get completely dissolved.

Sewage mixed with oxygen, after moving downwards along outer column R2, is sucked into central column R1, as shown by arrow B, by axial pump AG1, in order to be subsequently discharged to the outer ring between R1 and R2, through a weir, so that it can move downwards through one or more openings 10 in the settling section TH2, which is closed at the bottom by separator 6. Sewage in central column R1 has a low rising velocity, approximately 0.20 m/sec, whereby the contact time between the last gas bubbles possibly left undissolved and the sewage is increased. In addition, downward tapering column R1 prevents slurries from settling at the bottom.

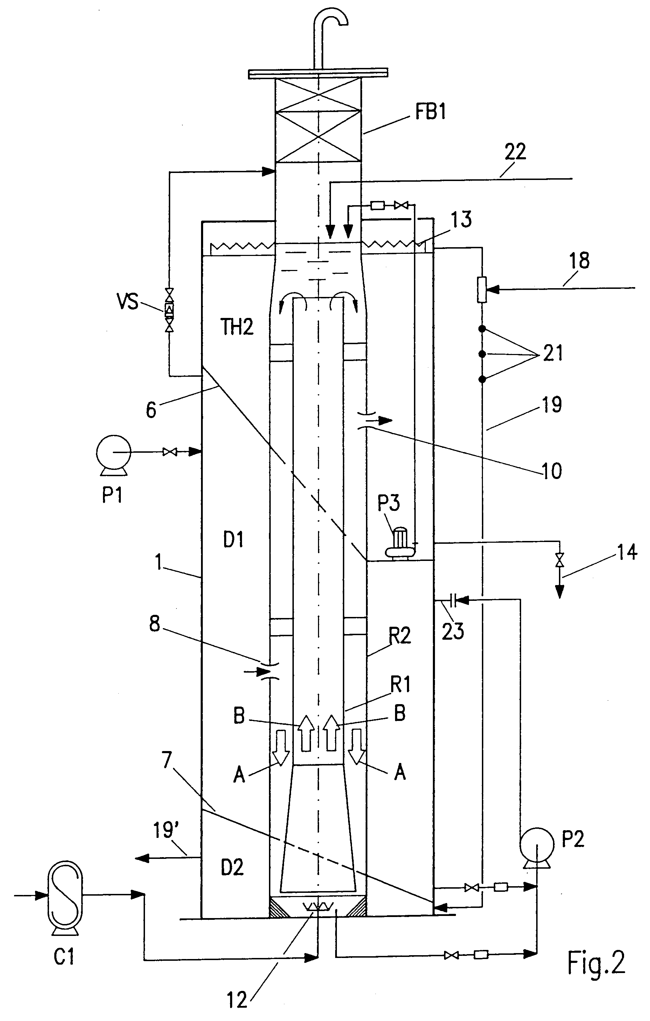

When sewage flows over the weir to outer column R2, the CO₂ and N₂ generated by the biological reactions evolve at the top from the oxy-nitrification section, and they get mixed together with an air flow 11, which flows through bacteriostatic filter FB1 and is then vented by fan V1 which exhausts purified gases to the environment. In the second embodiment, shown in Figure 2, oxygen from oxy-nitrification section R1, R2 is provided to the sewage by blowing air therethrough by means of fine bubble aerators 12 which are supplied by a blower C1 through the lower portion of inner column R1. In this case, the lower portion of this column flares outwards so that, as in the pure oxygen embodiment described above, it provides an upward flow, as shown by arrow B, of fine bubbles triggering sewage recirculation.

In this case too sewage goes over a weir from the top of column R1 into column R2, and it enters settling section TH2 through openings 10, while the air bubbles are entrained towards the column top by going through bacteriostatic filter FB1 which comprises for instance a coalescence filter packing and an activated carbon layer, with sterilizing substances being possibly present, or with a similar ozonizing method if this is made necessary by particular environmental requirements, with a final venting to the environment.

As an alternative to two the embodiments described above, a third approach might provide both pure oxygen injection into outer column R2 from the top, and air injection into the lower portion of inner column R1. Either in the oxygen based, or in the air based, or in the mixed air/oxygen based types of embodiments, the sewage and the active slurry are separated in the settling section TH2. In all three embodiments, column R2 may be tapered upwards, in order to reach a result of most positively preventing undissolved oxygen bubbles from rising, while providing a large settling surface. Settling section TH2 is covered by a grating 13 through which it is possible to check operations thereof, and to easily clean and maintain the same.

Still according to Figures 1 and 2, the slime which has settled at the bottom of settling section TH2 is withdrawn by pump P3, which normally recycles the same to oxy-nitrification section R1, R2.

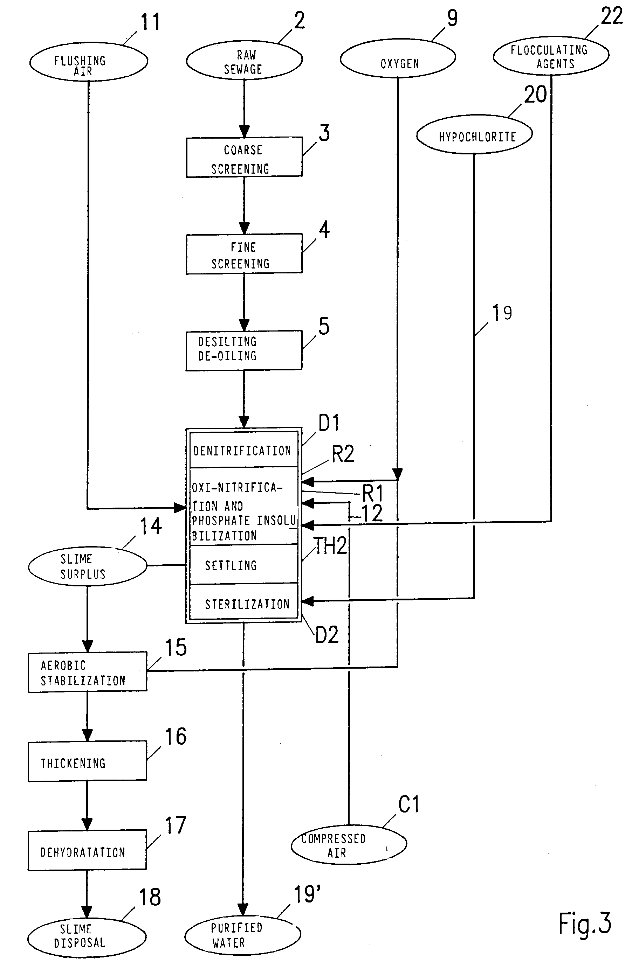

The slime in excess 14 is transferred by gravity to the subsequent known type processing sections which, as it is shown in Figure 3, may be an aerobic stabilizing one 15, a thickening one 16, a dehydrating one 17, followed by slime disposal 18. For small size systems the cycle is often reduced to a simple drying on filtering beds. The clarified water is transferred from settling section TH2 to sterilizing section D2 located at the bottom of the columns, beneath separator 7. Water transfer from the settling section to the sterilizing section takes place through a downcomer 19 wherein a sterilizing agent is injected, for instance an hypochlorite-based agent 20, which is injected along the way by means of static mixers 21. Section D2 is provided with suitable diaphragms (not shown in the Figures, which prevent short-circuiting problems) and with purified water outlet 19'.

Phosphorus compounds removal which is already biochemically provided during the cycle may be completed, if required, by injecting flocculating agents 22 by means of a metering pump in to oxy-nitrification section R1, R2, whereby insoluble phosphates are obtained.

Recirculated sewage is transferred to de-nitrification section D1, at inlet 23, by means of pump P2 which provides as well the internal stirring energy necessary to prevent settling problems and/or dead zones. Sewage intake 23 is provided tangentially in order to subject the whole liquid mass to a slow rotary motion for the purpose of homogenizing the composition and of keeping slurries in suspension.

As it should be apparent from the above description, both in the pure oxygen-based and in the air-based embodiment, the advantages provided by this invention are as follows:
- obnoxious aerosols are completely absent, whereby any air pollution is prevented;
- the assembly is extremely close-packed, it may be shipped on highways, also for communities having a population up to 2 - 3000 people;
- field erection is very simple and quick;
- overall dimensions are reduced to a minimum, whereby the land capital costs are a minimum;
- system control and/or partial load operations are easily performed by suitably proportioning oxygen and air flows to be injected;
- operations may be completely automatic, and operational parameters may be continuously monitored;
- large settling surfaces are provided, owing to the tapering of the upper portion of the outer column of the biological oxy-nitrification section;
- by means of a simple outer thermal insulation it is possible to operate in a very cold weather, since the heat generated by biological oxy-nitrification reactions is not lost to the environment.

In particular, the pure oxygen-based embodiment provides the following advantages:
- owing to the special tapering of the central column lower portion, slime deposits at the bottom of the oxy-nitrification section are positively prevented;
- owing to the oxy-nitrification section double tapering feature, an extremely high oxygen dissolution effectiveness (up to 100%) is assured;
- owing to CO₂ removal and to the high concentration of biomass, which may be obtained by using pure oxygen, high oxy-nitrification yields are provided;
- owing to the high biological reactivity of oxygen, steady state operation is reached in an extremely short time.

The embodiment wherein compressed air is supplied requires a slight enlargement of the oxy-nitrification section and a substantial increase in the size of the bacteriostatic filter described above. Therefore, the initial installation cost will be higher; on the other hand operating costs are certainly lower compared to the pure oxygen approach.

## Claims

1. A domestic and industrial type sewage biological purification system including a de-nitrification section, an oxy-nitrification section, a settling section and a sterilizing section, characterized in that a single vertical structure includes said sections therewithin, said structure being partitioned by separators and by cylindrical columns in four portions wherein the intermediate outer portion comprises said de-nitrification section connected with said oxy-nitrification section comprising two mutually concentrical columns, wherein the outer column is connected with the settling section comprising the upper portion of said structure, and in that said settling section is connected with the sterilizing section comprising the lower portion of said structure, the de-nitrification section carrying the sewage entrance and the generated nitrogen outlet, the sterilizing section carrying the purified water outlet, and said outer column carrying the entrance of the sewage coming from the de-nitrification section, said sewage moving downwards along the outer column and rising along the inner column, in order to overflow into the outer column upper portion, in communication with said settling section, there being provided an oxygen and/or air intake to be mixed with said sewage, in the oxy-nitrification section.

2. The system of claim 1, characterized in that the oxygen intake is provided in the upper portion of the outer column, and the inner column is tapered in the lower portion thereof.

3. The system of claim 1, characterized in that the air intake is provided in the inner column lower portion, which column is widened in the lower portion thereof.

4. A system according to any one of the previous claims, characterized in that said separators are sloping.

5. A system according to any one of the previous claims, characterized in that a pump transfers sewage to be purified to said de-nitrification section after the sewage has passed through a screening, desilting and de-oiling apparatus.

6. A system according to any one of the previous claims, characterized in that a pump is adapted to transfer the recycled sewage into the de-nitrification section, in a tangential direction relative to said denitrification section.

7. A system according to any one of the previous claims, characterized in that sewage rising within the inner column flows over a weir into the outer column, and in that a fan is adapted to vent gaseous nitrogen and carbon dioxide generated by the reaction and collecting in the top portions of said columns, flowing through a bacteriostatic filter and exhausting as purified gases to the environment, being flushed by means of a moderate air flow.

8. A system according to any one of the previous claims, characterized in that a pump is adapted to withdraw the slime having settled at the bottom of the settling section, to recycle it to the oxy-nitrification section, the surplus amount of slime being transferred by gravity to the processing sections of aerobic stabilization, thickening, or simply drying over a filtering bed.

9. A system according to any one of the above claims, characterized in that a pipe connectes the settling section with the sterilizing section, the sterilizing agent being injected into said pipe through static mixers.

10. A system according to any one of the previous claims, characterized in that a metering pump is adapted to inject flocculating agents into the oxy-nitrification section, in order to complete the removal of phosphorus compounds.

11. A system according to any one of the previous claims, characterized in that said concentric columns have a round or polygonal cross-section.

12. A system according to any one of the previous claims, characterized in that the outer column has a tapered upper portion.

13. The system of claim 7, characterized in that the nitrogen generated in the settling section is vented through a purge valve and is transferred to a bacteriostatic filter.

## Patentansprüche

1. Biologisches Reinigungssystem für häusliches bzw. gewerbliches Abwasser, umfassend einen Denitrifikations-abschnitt, einen Oxynitrifikations-abschnitt, einen Absetz-abschnitt und einen Sterilisations-abschnitt, dadurch gekennzeichnet, daß eine einzige senkrechte Struktur die genannte Abschnitte in sich einschließt, wobei die genannte Struktur durch Separatoren und zylindrischen Säulen in vier Teile getrennt ist, worin der zwischenliegende äussere Teil den genannten Denitrifikations-abschnitt umfaßt, der mit dem genannten zwei konzentrische Säulen umfassenden Oxynitrifikations-abschnitt verbunden ist, worin die äussere Säule mit dem den oberen Teil der genannten Struktur umfassenden Absetz-abschnitt verbunden ist, und daß der genannte Absetz-abschnitt mit dem den unteren Teil der genannten Struktur umfassenden Sterilisations-abschnitt verbunden ist, wobei der Denitrifikations-abschnitt den Abwassereinlaß und den Auslaß für den erzeugten Stickstoff trägt, der Sterilisations-abschnitt den Auslaß für das gereinigte Wasser trägt, und die genannte äussere Säule den Einlaß für das aus dem Denitrifikations-abschnitt kommende Abwasser trägt, wobei das genannte Abwasser die äussere Säule entlang abfließt und die innere Säule entlang aufsteigt und in den oberen mit dem genannten Absetz-abschnitt verbundenen Teil der äußeren Säule überläuft, wobei ein Einlaß für in das genannte Abwasser einzumischende Oxygen und/oder Luft in dem Oxynitrifikations-abschnitt vorgesehen ist.

2. System nach Aspruch 1, dadurch gekennzeichnet, daß der Oxygeneinlaß in dem oberen Teil der äußeren Säule vorgesehen ist, und die innere Säule in ihrem unteren Teil verjüngt ist.

3. System nach Aspruch 1, dadurch gekennzeichnet, daß der Lufteinlaß in dem unteren Teil der inneren Säule vorgesehen ist, die in ihrem unteren Teil erweitert ist.

4. System nach irgendeinem der vorhergehenden Ansprüche, dadurch gekennzeichnet, daß die genannte Separatoren geneigt verlaufen.

5. System nach irgendeinem der vorhergehenden Ansprüche, dadurch gekennzeichnet, daß eine Pumpe das zu reinigende Abwasser zum genannten Denitrifikations-abschnitt übertragt, nachdem das Abwasser durch ein Sieb-, Sandfang- und Entölungs-apparat durchflossen ist.

6. System nach irgendeinem der vorhergehenden Ansprüche, dadurch gekennzeichnet, daß eine Pumpe das zurückgeführte Abwasser in den Denitrifikations-abschnitt in zum genannten Denitrifikations-abschnitt bezogene Umfangsrichtung überzutragen geignet ist.

7. System nach irgendeinem der vorhergehenden Ansprüche, dadurch gekennzeichnet, daß Abwasser, das in der inneren Säule aufsteigt über ein Wehr in die äußere Säule ineinfließt, und daß ein Gebläse in der Lage ist Stickstoffgas und Kohlenstoffdioxidgas abzublasen, die durch die Reaktion erzeugt werden, sich in den oberen Teilen der genannten Säulen sammeln, durch ein bakteriostatisches Filter durchfließen, und als gereinigte Gase in die Umgebung ausgelassen werden, wobei die genannte Gase durch einen gelinden Luftfluß eingeschleppt werden.

8. System nach irgendeinem der vorhergehenden Ansprüche, dadurch gekennzeichnet, daß eine Pumpe in der Lage ist, den Schlamm, der am Boden des Absetz-abschnittes sich abgeschieden hat zu entfernen und zum Oxynitrifikations-abschnitt rückzuführen, wobei der Schlammüberschuß durch die Schwerkraft zu die Aufarbeitungs-abschnitte der aerobischen Stabilisation, Verdickung bzw. lediglich Trocknung auf einem Filterbett übertragt wird.

9. System nach irgendeinem der vorhergehenden Ansprüche, dadurch gekennzeichnet, daß eine Rohrleitung den Absetz-abschnitt mit dem Sterilisations-abschnitt verbindet, wobei das Sterilisierungsmittel in die genannte Rohrleitung durch statische Mischer eingedüst wird.

10. System nach irgendeinem der vorhergehenden Ansprüche, dadurch gekennzeichnet, daß eine Dosierpumpe in der Lage ist, Flockulationsmittel in den Oxynitrifikations-abschnitt einzudüsen, damit die Entfernung von Phosphorverbindungen vervollständigt wird.

11. System nach irgendeinem der vorhergehenden Ansprüche, dadurch gekennzeichnet, daß die genannte konzentrische Säulen eine kreisrunde bzw. mehrkantige Durchschnittform aufweisen.

12. System nach irgendeinem der vorhergehenden Ansprüche, dadurch gekennzeichnet, daß die äußere Säule einen verjüngten oberen Teil aufweist.

13. System nach Anspruche 7, dadurch gekennzeichnet, daß Stickstoff, das in dem Absetz-abschnitt erzeugt wird durch ein Entlüftungventil abgelassen und zu ein bakteriostatisches Filter übertragen wird.

## Revendications

1. Système de purification biologique des eaux d'égout de type domestique et industriel comprenant une section de denitrification, une section d'oxy-nitrification, une section de décantation et une section de stérilisation, caractérisé en ce qu'une structure verticale unique contient ces sections, cette structure étant divisée par des séparateurs et des colonnes cylindriques en quatre portions dont la portion intermédiaire extérieure comprend la section de dénitrifcation reliée à la section d'oxy-nitrification comprenant deux colonnes mutuellement concentriques, dans lequel la colonne extérieure est reliée à la section de décantation comprenant la portion supérieure de la structure, et en ce que la section de décantation est reliée à la section de stérilisation comprenant la portion inférieure de la structure, la section de dénitrification portant l'entrée des eaux d'égout et la sortie de l'azote produit, la section de stérilisation portant la sortie de l'eau purifiée et la colonne extérieure portant l'entrée des eaux d'égout provenant de la section de dénitrification , les eaux d'égout se déplaçant vers le bas le long de la colonne extérieure et s'élevant le long de la colonne intérieure, afin de se déverser dans la portion supérieure de la colonne extérieure, en communication avec la section de décantation, une entrée d'air et/ou d'oxygène à mélanger aux eaux d'égout étant prévue dans la section d'oxy-nitrification.

2. Système selon la revendication 1, caractérisé en ce que l'entrée d'oxygène est prévue dans la portion supérieure de la colonne extérieure et en ce que la colonne intérieure est en pente dans sa portion inférieure.

3. Système selon la revendication 1, caractérisé en ce que l'entrée d'air est prévue à la portion inférieure de la colonne intérieure, colonne qui est élargie dans sa portion inférieure.

4. Système selon l'une quelconque des revendications précédentes, caractérisé en ce que les séparateurs sont inclinés.

5. Système selon l'une quelconque des revendications précédentes, caractérisé en ce qu'une pompe transfère les eaux d'égout à purifier à la section de dénitrification après que les eaux d'égout aient traversé un appareil de filtrage, de dessalage et deshuilage.

6. Système selon l'une quelconque des revendications précédentes, caractérisé en ce qu'une pompe permet de transférer dans la section de dénitrification les eaux d'égout recyclées , dans une direction tangentielle par rapport à cette section de dénitrification.

7. Système selon l'une quelconque des revendications précédentes, caractérisé en ce que les eaux d'égout s'élevant à l'intérieur de la colonne intérieure s'écoulent au-dessus d'un déversoir dans la colonne extérieure et en ce qu'un ventilateur permet de capter le dioyde de carbone et l'azote gazeux produits par la réaction en les collectant dans les portions supérieures des colonnes, en les faisant passer à travers un filtre bactériostatique et en en les faissant échapper dans l'air ambiant comme gaz purifiés, en étant chasses par un débit modéré d'air.

8. Système selon l'une quelconque des revendications précédentes, caractérisé en ce qu'une pompe permet de retirer la boue ayant décanté au fond de la section de décantation, pour la recycler à la section d'oxy-nitrification, le surplus de boue étant transféré par gravité aux sections de traitement de stabilisation aérobique, d'épaississement ou simplement de séchage sur un lit filtrant.

9. Système selon l'une quelconque des revendications précédentes, caractérisé en ce qu'un conduit relie la section de décantation à la section de stérilisation, l'agent de stérilisation étant injecté dans cette conduite par des mélangeurs statiques.

10. Système selon l'une quelconque des revendications précédentes, caractérisé en ce qu'une pompe de mesure permet d'injecter des agents de floculation dans la section d'oxy-nitrification afin de terminer le retrait des composés phosphorés.

11. Système selon l'une quelconque des revendications précédentes, caractérisé en ce que les colonnes concentriques ont une section transversale circulaire ou polygonale.

12. Système selon l'une quelconque des revendications précédentes, caractérisé en ce que la colonne extérieure a une portion supérieure conique.

13. Système selon la revendication 7 caractérisé en ce que l'azote produit dans la section de décantation est capté par une vanne de purge et transféré à un filtre bactériostatique.
